# EUROPEAN PATENT APPLICATION

(11) **EP 1 898 029 A1**
(43) Date of publication of application: **12.03.2008**
(21) Application number: 06742024.0
(22) Date of filing: 29.05.2006
(51) Int. Cl.: E04H 1/04

(54) **AN UPLIFTED VILLA**

(30) Priority: 15.06.2005 CN 200520019790 U
(71) Applicant: Beijing Liweisi Kaiya Real Estate Development Co. Ltd., Chao Yang District, Beijing 100023 (CN)
(72) Inventor: LI, Zhe 5/F, No. 40, Xiao Ba Li Zhuang, Chao Yang District, Beijing 100021 (CN)
(74) Representative: Jacobson, Claude
(86) International application number: PCT/CN2006/001136
(87) International publication number: WO 2006/133623

(57) **Abstract**

The present invention relates to a liftable house and a lifting device for carrying the room to move up and down, said room-lifting device includes: a rigid lifting tray (3) for supporting the room; a drive unit for driving rigid lifting tray (3) to move up and down, said drive unit including a plurality of hydraulic cylinders (6) and a hydraulic circuit for operatively driving said hydraulic cylinder, the cylinder rod of said hydraulic cylinder supporting the rigid lifting tray (3) on its bottom surface; a guide unit for guiding the lifting tray (3) to move up and down, said guide unit including a guidepost (2) and a guide wheel in a internal guide channel of said guidepost; a long-term locking unit for positioning the lifting tray (3) along vertical direction in the long term, which including a extendable/retractable member (12) mounted on the lifting tray (3) and a stop (13) provided in the guidepost (2) at various heights to support the extendable/retractable member (12); a control unit for controlling the operation of said lifting drive unit and said long-term locking unit.

## Description

### Technical field

The present invention relates to a liftable house and a room-lifting device for carrying rooms in the house to move up and down.

### Background of the Invention

With the growth in the living standard, people's requirements for residence, in particularly rooms are increasingly strict. People not only seek convenience, comfort, and good environment, but also demand to make the building produce more space, make the spatial arrangement of the residence, visual field of the occupant and activities of the master change greatly, thereby afford people a new feeling.

However, the above requirements cannot be met because the residences such as house are immovable.

### Summary of the Invention

An object of the present invention is to provide a liftable house which can move up and down, the master of house can control it indoors to position the building at a new position, and make the spatial arrangement of the residence, visual field of the room and activities of the master change greatly, thereby afford people a new feeling.

The present invention provides a room-lifting device used for the house including a plurality of guidepost standing on the ground; a rigid lifting tray for carrying the liftable room; a guide unit by which said rigid lifting tray connects to said rigid support post; a hydraulic system including a plurality of hydraulic cylinders and a flow distribution control system for hydraulic controlling the hydraulic cylinders, each of said hydraulic cylinder has a plunger connecting with said rigid lifting tray and a second guide unit for guiding said plunger; supporting post standing on the ground for supporting the hydraulic cylinders; a locking unit for locking the rigid lifting tray carrying the liftable room at the proper heights; wherein said hydraulic system provides the lifting device with power, and said plunger moves up and down along said second guide unit, thereby allowing the liftable room to move up and down to a required height and to be locked there by the locking unit.

With the room-lifting device of the present invention, it is possible to make the room move up and down under the control of the master, to position the building at a new position, and make the spatial arrangement of the residence, visual field of the room and activities of the master change, thereby afford people a new feeling. At the same time, the room-lifting device of the present invention enables synchronization action of the plurality of hydraulic cylinders, and has advantages of uniformity of operation, low noise and long-term locking on the extreme higher position.

### Brief description of the Drawings

Figure 1 is a front view of the liftable room of the present invention
Figure 2 is a side view of the liftable room of the present invention.
Figure 3 is a top view of the liftable room of the present invention.
Figure 4 is a front view of the rigid tray of the room-lifting device.
Figure 5 is a top view of the rigid tray of the room-lifting device.
Figure 6 is a diagrammatic view of a guide unit of the room-lifting device and a long-term locking unit of the present invention.
Figure 7 is a cutaway side view of the guide unit of figure 6.
Figure 8 is a cutaway top view of the guide unit of figure 6.
Figure 9 is a diagrammatic view of the hydraulic system of the room-lifting device.
Figure 10 is an elevation view showing the liftable house including the liftable room of the present invention before rising.
Figure 11 is an elevation view showing the liftable house including the liftable room of the present invention after rising.

### Description of the Preferred Embodiment

Now referring to the figures, the preferred embodiment will be explained in detail.

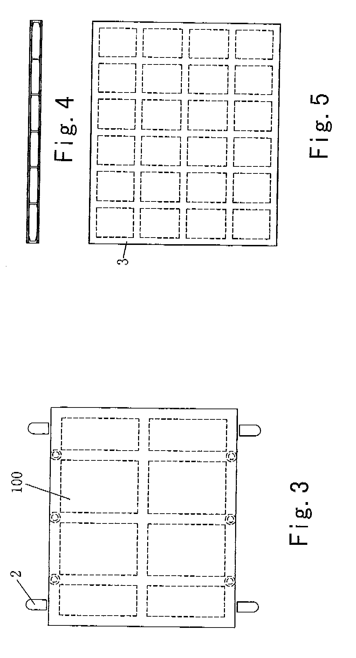

As shown in figures 3 - 9, a liftable room according to the preferred embodiment of present invention includes a liftable room 100 and a room-lifting device for carrying the liftable room 100.

Now the room-lifting device will be introduced in detail.

The room-lifting device of the present invention includes: a rigid lifting tray 3 for carrying the liftable room 100 to move up and down; a lifting drive unit for driving the rigid lifting tray 3 to move up and down; a guide unit for guiding the lifting tray 3 to move up and down; a long-term locking unit for long-term positioning the liftable room 100 along vertical direction; a control unit for controlling the operation of said lifting drive unit and said long-term locking unit.

As shown in figure 4 and 5, the rigid lifting tray 3 is formed by a steel frame structure, with the thickness of preferably 500 mm or more, thereby adequate rigidness for the load of 180 ton is ensured, and the deformation phenomena such as curling, distortion and inclination are avoided while moving or stopping. Although there is a little deformity, the deformity will fall within the permissible scope of construct specification (for example, for a liftable room spanning 8.7 meter, the maximum flexibility of the rigid lifting tray is 3 millimeter). Preferably, the rigid lifting tray is joined with the bottom of the liftable room by bolts. Of course, other known join means may be used.

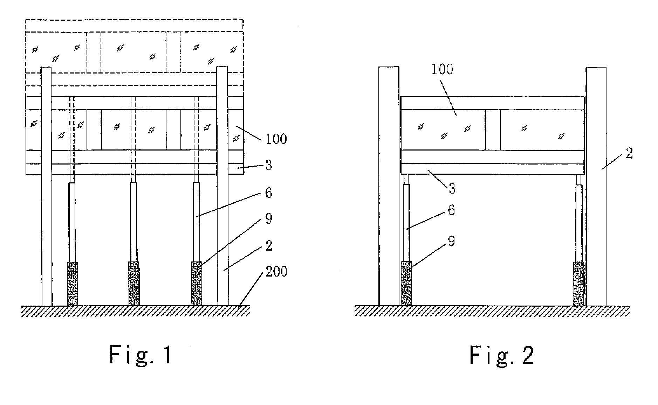

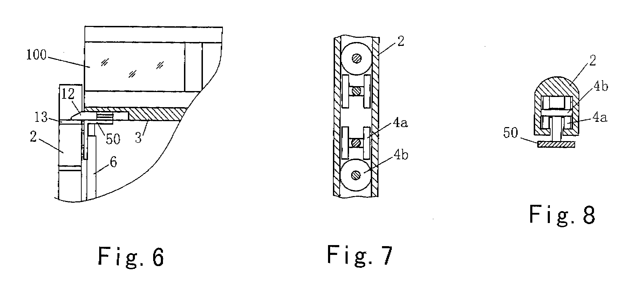

As shown in figures 1,2,6-8, the guide unit includes: a plurality of rigid guideposts 2 (there are four guideposts visible in embodiments of figures) standing on the ground 200 and having inner guide grooves therein, as shown in figure 8; longitudinal guide wheels 4a supported by a back wall or a front wall of the inner guide grooves to rotate and move up and down; transverse guide wheels 4b supported by a right wall or a left wall of the inner guide grooves to rotate and move up and down; brackets 50 for joining the various guide wheels to the lifting tray 3. The lifting tray 3 can move up and down by the guiding of the guide units.

A lifting drive unit includes: a plurality of hydraulic cylinders 6 (there are six cylinders visible in the embodiments of figures), which cylinder rods support the rigid lifting tray 3 on its the bottom surface; hydraulic cylinder supporting posts 9 standing on the ground for supporting hydraulic cylinder bodies, the number of said posts is the same as that of the hydraulic cylinders; hydraulic circuit for driving said hydraulic cylinder under the control of the control unit.

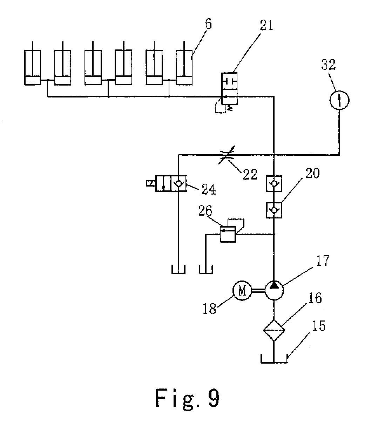

As shown in figure 9, said hydraulic circuit includes a main pipeline leading to said various hydraulic cylinders from a pressure source , which comprises in series: an oil tank 15 containing hydraulic oil; a filter 16 connecting with the oil tank 15; a pump 17 connecting with the filter 16, said pump 17, such as a gear pump, being driven by a motor 18 thereby to supply hydraulic oil from the oil tank; a check valve 20 configured as a one way hydraulic lock for allowing hydraulic oil to flow to the hydraulic cylinder, but preventing hydraulic oil from counterflow; pressure protection valve 21 which is a two-directional two-way valve adjacent to said hydraulic cylinder. Said two-way valve is normally open to allow hydraulic oil to flow to the hydraulic cylinder, and is closed once the members upstream or the main pipeline break, thereby preventing the hydraulic oil in the hydraulic cylinder from quick-return flowing and dropping suddenly of the lifting tray 3 in case of malfunction.

A branched pipeline is branched from the main pipeline between the pump 17 and check valve 20, and said branched pipeline is provided with a relief valve (overflow valve) 26 therein. The relief valve is normally off. If the pressure in the main pipeline is exceeded at a predetermined value, the relief valve opens to decrease the pressure in the main pipeline. Furthermore, a pressure gauge 32 is connected to the main pipeline in order to monitor the pressure in the main pipeline.

Another branched pipeline is branched from the main pipeline between the check valve 20 and the breakage preventing valve 21, and said another branched pipeline is provided with a throttle valve 22 and a backflow valve 24. The backflow valve 24 is a solenoid operated two-position two-way valve and is normally a check valve for preventing the hydraulic oil in the hydraulic cylinder from flowing therefrom. But when it receives an instruction from the control unit, the backflow valve 24 turns to open to allow the hydraulic oil in the hydraulic cylinder to flow therefrom, thus lowering the lifting tray 3.

The embodiment shown in figure 9 adopts two check valves 20 to improve the reliability of the one-way hydraulic lock. The one-way hydraulic lock actually can also be used as a temporary lock for locking the rigid lifting tray 3 at a proper elevation.

A long-term lock, for long-term locking the rigid lifting tray 3 on a special position in the vertical direction of the rigid guidepost, is shown in figure 6. The long-term lock includes an electromagnetic operated extendable/retractable member 12, and a stop 13 provided at the various heights of the guidepost 2 for supporting the extendable/retractable member 12. When a user desires the liftable room 100 to long-term position at a special height, he can operate the control unit to stop the hydraulic cylinder and control said extendable/retractable member 12 to expand, then said stop 13 supports the expanded extendable/retractable member 12 from below, thereby positioning said rigid lifting tray in the long term. Said stop 13 may be a projection or a recess on the lateral surface of the guidepost 2.

In the present invention, power is supplied to the lifting device by a hydraulic cylinder, and the rigid lifting tray 3 moves up and down by the up-and-down movement of the cylinder rod of the hydraulic cylinder, thereby allowing the liftable room to move up and down to a required height and lock it by a temporary or long-term lock. There are guide wheels 4 connected with the rigid lifting tray 3 inside each of the rigid guidepost. Therefore, during the up-and-down movement of the rigid lifting tray 3, the rigid lifting tray 3 moves up and down along the rigid guidepost 2, therefore people will not feel uncomfortable due to inclination. The hydraulic cylinder has a buffer unit to avoid the impact generated at the end of the stroke of the hydraulic cylinder.

The water discharge and gas supply system of the liftable room of the present invention can be provided with appropriate hoses based on the amount of the discharge and supply. These hoses are able to extend to an appropriate length, in the preferred embodiment of the present invention, for example, at least 3.6 meters. The liftable room can be powered by a cable which can move up and down in the cable-sliding trough, thereby to be powered securely.

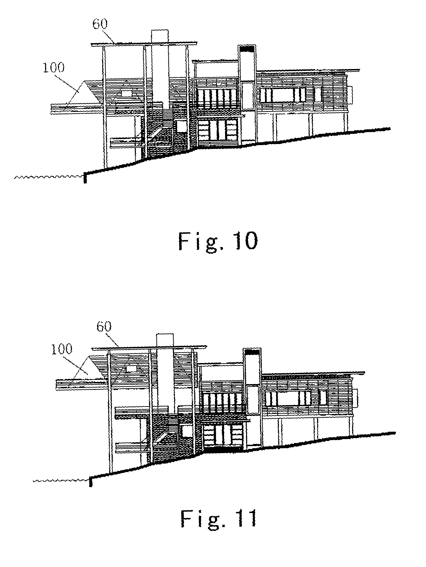

The liftable room of the present invention can either be used separately, or be combined with other fixed structure to form a combined type building. For example, figure 10 and 11 show a house including the liftable room of the present invention. It can be seen that the liftable room 100 according to the present invention can rise (figure 10) and fall (figure 11) freely. Whereas other housing construction matched with the liftable room 100 is immovable. Furthermore, as an additional feature of the present invention, an immovable shield platform 60 is provided above the liftable room 100 to protect the liftable room 100 and related auxiliary facilities.

Obviously, the above embodiments have been described herein not for purposes of limitation, and those skilled in the art can modify and replace the embodiments without departing from the spirit of the invention. For example, the guide unit, which guides the rigid lifting tray to move up and down along the guidepost may not be the guide wheel in the rigid guidepost, but may be other known guide units. Furthermore, the hydraulic cylinders in the preferred embodiments of the present invention may be not six, but may be any other quantity.

## Claims

1. A liftable house **characterized in that** at least one room in the house can move up and down by a room-lifting device so as to change the visual field of the occupant.

2. The liftable house of claim 1 wherein said at least one room can be temporarily locked at various heights as desired.

3. The liftable house of claim 1 wherein said at least one room can be long-term locked on the position at the minimum height or the maximum height.

4. A room-lifting device for a liftable house, which can carry at least one room to move up and down, wherein said room-lifting device includes:
a rigid lifting tray (3) for supporting the room;
a drive unit for driving rigid lifting tray (3) to move up and down, said drive unit including a plurality of hydraulic cylinders (6) and a hydraulic circuit for operatively driving said hydraulic cylinder, the cylinder rod of said hydraulic cylinder supporting the rigid lifting tray (3) on its bottom surface;
a guide unit for guiding the lifting tray (3) to move up and down, said guide unit including a guidepost (2) and a guide wheel in a internal guide channel of said guidepost;
a long-term locking unit for positioning the lifting tray (3) along vertical direction in the long term, which including a extendable/retractable member (12) mounted on the lifting tray (3) and a stop (13) provided in the guidepost (2) at various heights to support the extendable/retractable member (12);
a control unit for controlling the operation of said lifting drive unit and said long-term locking unit.

5. The room-lifting device of claim 4 wherein said lifting drive unit further includes a hydraulic cylinder supporting post (9) standing on the ground for supporting the body of the hydraulic cylinder.

6. The room-lifting device of claim 4 wherein said hydraulic circuit includes a main pipeline leading to said hydraulic cylinders from a pressure source, which comprises in series: a oil tank (15) for containing hydraulic oil; a pump (17) for pumping hydraulic oil from the oil tank; a check valve (20) for allowing hydraulic oil to flow to the hydraulic cylinder but preventing from counterflow; a pressure protection valve (21) adjacent to said hydraulic cylinder, said valve (21) is normally open to allow hydraulic oil to flow to the hydraulic cylinder, and is closed once the members upstream or the main pipeline break.

7. The room-lifting device of claim 6 wherein said hydraulic circuit further includes a branched pipeline branched from the main pipeline between the pump (17) and check valve (20) and provided with a relief valve (26).

8. The room-lifting device of claim 6 wherein said hydraulic circuit further includes a branched pipeline branched from the main pipeline between the check valve (20) and pressure protection valve (21) and provided with a throttle valve (22) and a backflow valve (24).

9. The room-lifting device of claim 4 wherein said guide wheel includes longitudinal guide wheels (4a) supported by back wall or forth wall of inner guide grooves to rotate and move up and down, and transverse guide wheels (4b) supported by right wall or left wall of inner guide grooves to rotate and move up and down.

10. The room-lifting device of claim 4 wherein said stop 13 is a projection on the lateral surface of the guidepost (2) or a recess provided in the guidepost (2).
